# FASCICULE DE BREVET EUROPEEN

(11) **EP 2 358 775 B1**
(45) Date de publication et mention de la délivrance du brevet: **10.10.2012**
(21) Numéro de dépôt: 09760486.2
(22) Date de dépôt: 17.11.2009
(51) Int. Cl.: C08F 297/04, C08L 53/02, B60C 1/00, B60C 5/14, C08L 53/00

(54) **OBJET PNEUMATIQUE POURVU D'UNE COUCHE ETANCHE AUX GAZ A BASE D'UN ELASTOMERE THERMOPLASTIQUE SIBS SPECIFIQUE**
DRUCKLUFTOBJEKT MIT GASDICHTER SCHICHT MIT EINEM SPEZIELLEN THERMOPLASTISCHEN SIBS-ELASTOMER
PNEUMATIC OBJECT HAVING A GAS TIGHT LAYER CONTAINING A SPECIFIC SIBS THERMOPLASTIC ELASTOMER

(30) Priorité: 19.11.2008 FR 0857845
(43) Date de publication de la demande: 24.08.2011
(73) Titulaire: COMPAGNIE GENERALE DES ETABLISSEMENTS MICHELIN, 63000 Clermont-Ferrand (FR); Michelin Recherche et Technique S.A., 1763 Granges-Paccot (CH)
(72) Inventeur: LESAGE, Pierre, F-63000 Clermont-Ferrand (FR); CUSTODERO, Emmanuel, F-63400 Chamalieres (FR); THUILLIEZ, Julien, F-63100 Clermont-Ferrand (FR); GREIVELDINGER, Marc, F-63140 Chatel Guyon (FR)
(74) Mandataire: Le Cam, Véronique Marie Christine
(86) Numéro de dépôt international: PCT/EP2009/008155
(87) Numéro de publication internationale: WO 2010/057612

(56) Documents cités:
- EP-A- 1 380 604
- US-A- 4 946 899
- US-A- 5 428 111
- US-A1- 2002 037 962

## Description

La présente invention est relative aux objets "pneumatiques", c'est-à-dire, par définition, aux objets qui prennent leur forme utilisable quand on les gonfle d'air ou d'un gaz de gonflage équivalent.

Elle se rapporte plus particulièrement aux couches étanches aux gaz assurant l'étanchéité de ces objets pneumatiques, en particulier celle des bandages pneumatiques.

Dans un bandage pneumatique conventionnel du type "tubeless" (c'est-à-dire sans chambre à air), la face radialement interne comporte une couche étanche à l'air (ou plus généralement à tout gaz de gonflage) qui permet le gonflement et le maintien sous pression du bandage pneumatique. Ses propriétés d'étanchéité lui permettent de garantir un taux de perte de pression relativement faible, permettant de maintenir le bandage gonflé en état de fonctionnement normal pendant une durée suffisante, normalement de plusieurs semaines ou plusieurs mois. Elle a également pour fonction de protéger l'armature de carcasse de la diffusion d'air provenant de l'espace intérieur au bandage.

Cette fonction de couche interne ou "gomme intérieure" ("inner liner") étanche est aujourd'hui remplie par des compositions à base de caoutchouc butyle (copolymère d'isobutylène et d'isoprène), reconnues depuis fort longtemps pour leurs excellentes propriétés d'étanchéité.

Toutefois, un inconvénient bien connu des compositions à base de caoutchouc ou élastomère butyle est qu'elles présentent des pertes hystérétiques importantes, qui plus est sur un spectre large de température, inconvénient qui pénalise la résistance au roulement des bandages pneumatiques.

Diminuer l'hystérèse de ces couches internes d'étanchéité et donc in fine la consommation de carburant des véhicules automobiles, est un objectif général auquel se heurte la technologie actuelle.

Or, les Demanderesses ont découvert lors de leurs recherches qu'un élastomère autre que butyle permet l'obtention de couches internes d'étanchéité répondant à un tel objectif, tout en offrant à ces dernières de très bonnes propriétés d'étanchéité. Plus particulièrement, les Demanderesses ont découvert que l'utilisation d'un nouvel élastomère thermoplastique de type SIBS dans des gommes intérieures étanches, en remplacement du butyle, confère à celle-ci des propriétés d'hystérèse améliorées, tout en conservant une cohésion à chaud du mélange et une capacité d'adhésion aux composants en caoutchouc qui lui sont adjacents.

Ainsi, selon un premier objet, la présente invention concerne un objet pneumatique pourvu d'une couche élastomère étanche aux gaz de gonflage tels que l'air, ladite couche élastomère comportant au moins, à titre d'élastomère majoritaire, un nouvel élastomère thermoplastique SIBS.

Comparativement aux caoutchoucs butyle, le SIBS présente en outre l'avantage majeur, en raison de sa nature thermoplastique, de pouvoir être travaillé tel quel à l'état fondu (liquide), et par conséquent d'offrir une possibilité de mise en oeuvre simplifiée.

L'invention concerne particulièrement les objets pneumatiques en caoutchouc tels que des bandages pneumatiques, ou les chambres à air, notamment les chambres à air pour bandage pneumatique.

L'invention concerne plus particulièrement les bandages pneumatiques destinés à équiper des véhicules à moteur de type tourisme, SUV ("Sport Utility Vehicles"), deux roues (notamment motos), avions, comme des véhicules industriels choisis parmi camionnettes, "Poids-lourd" - c'est-à-dire métro, bus, engins de transport routier (camions, tracteurs, remorques), véhicules hors-la-route tels qu'engins agricoles ou de génie civil -, autres véhicules de transport ou de manutention.

L'invention concerne également un procédé pour étanchéifier un objet pneumatique vis-à-vis des gaz de gonflage, dans lequel on incorpore audit objet pneumatique lors de sa fabrication, ou on ajoute audit objet pneumatique après sa fabrication, une couche élastomère étanche aux gaz telle que définie ci-dessus.

L'invention concerne également l'utilisation comme couche étanche aux gaz de gonflage, dans un objet pneumatique, d'une couche élastomère telle que définie ci-dessus.

Dans la présente description, sauf indication expresse différente, tous les pourcentages (%) indiqués sont des % en masse.

Dans la description de l'invention qui suit les expressions "élastomère SIBS", "copolymère à blocs élastomère thermoplastique" et "copolymère à blocs" sont équivalentes et pourront être utilisées indifféremment.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Ainsi, un premier objet de l'invention est un objet pneumatique qui a pour caractéristique essentielle d'être pourvu d'au moins une couche ou composition élastomère étanche aux gaz qui comporte au moins, à titre d'élastomère majoritaire (en poids), un élastomère thermoplastique SIBS sous forme d'un copolymère à blocs comprenant au moins un bloc élastomérique composé majoritairement du monomère isobutylène polymérisé et, au moins à une des extrémités du copolymère à blocs, un bloc styrénique constitué d'au moins un composé styrénique polymérisé. Ce copolymère élastomérique thermoplastique à blocs présente les caractéristiques structurelles suivantes:
1) le bloc polyisobutylène présente une masse moléculaire moyenne en nombre ("Mn") allant de 25 000 g/mol à 350 000 g/mol et une température de transition vitreuse ("tg") inférieure ou égale à -20°C, et comprend un taux d'unités issues d'un ou de plusieurs diènes conjugués insérées dans la chaîne polymérique allant de 0,5% à 6% en poids par rapport au poids du bloc polyisobutylène,
2) le ou les blocs styréniques représentent au plus 16% en poids du poids total du copolymère à blocs.

Ainsi, cet élastomère thermoplastique styrénique sous forme d'un copolymère à blocs comprend au moins deux blocs.

Selon une variante de l'invention, le copolymère à blocs élastomérique thermoplastique se présente sous une forme linéaire tribloc. Le copolymère à blocs se compose alors d'un bloc polyisobutylène central et de deux blocs styréniques terminaux à chacune des deux extrémités du bloc polyisobutylène.

Selon une autre variante de l'invention, le copolymère à blocs élastomérique thermoplastique se présente sous une forme étoilé, à au moins trois branches. Le copolymère à blocs se compose alors d'un bloc polyisobutylène central étoilé à au moins trois branches et d'un bloc styrénique à l'extrémité de chacune des branches du polyisobutylène. Le nombre de branches du polyisobutylène varie de 3 à 12, et de préférence de 3 à 6.

Selon une autre variante de l'invention, le copolymère à blocs élastomérique thermoplastique se présente sous une forme branché ou dendrimère. Le copolymère à blocs se compose alors d'un bloc polyisobutylène central branché ou dendrimère et d'un bloc styrénique à l'extrémité des branches du polyisobutylène dendrimère.

Selon l'invention, on préfère que la température de transition vitreuse (Tg, mesurée selon ASTM D3418) du copolymère à blocs élastomérique thermoplastique soit inférieure à - 20°C, plus préférentiellement inférieure à - 40°C. Une valeur de Tg supérieure à ces minima peut diminuer les performances de la couche étanche lors d'une utilisation à très basse température ; pour une telle utilisation, la Tg du copolymère à bloc est plus préférentiellement encore inférieure à - 50°C.

La masse moléculaire moyenne en nombre (notée Mn) du copolymère à blocs est préférentiellement comprise entre 30 000 et 500 000 g/mol, plus préférentiellement comprise entre 40 000 et 400 000 g/mol. En dessous des minima indiqués, la cohésion entre les chaînes d'élastomère SIBS, notamment en raison de sa dilution éventuelle (en présence d'une huile d'extension), risque d'être affectée ; d'autre part, une augmentation de la température d'usage risque d'affecter les propriétés mécaniques, notamment les propriétés à la rupture, avec pour conséquence une performance diminuée "à chaud". Par ailleurs, une masse Mn trop élevée peut être pénalisante pour la souplesse de la couche étanche aux gaz. Ainsi, on a constaté qu'une valeur comprise dans un domaine de 50 000 à 300 000 g/mol était particulièrement bien adaptée, notamment à une utilisation du copolymère à blocs dans une composition pour un bandage pneumatique.

L'indice de polydispersité Ip (rappel : Ip = Mw/Mn avec Mw masse moléculaire moyenne en poids) du copolymère à blocs est de préférence inférieur à 3 ; plus préférentiellement Ip est inférieur à 2 et encore plus préférentiellement inférieure à 1,5.

Selon l'invention, le bloc polyisobutylène du copolymère à blocs présente une masse moléculaire moyenne en nombre ("Mn") allant de 25 000 g/mol à 350 000g/mol, de préférence 35 000 g/mol à 250 000 g/mol de manière à conférer au TPE de bonnes propriétés élastomériques et une tenue mécanique suffisante et compatible avec l'application gomme interne d'un bandage pneumatique

Selon l'invention, le bloc polyisobutylène du copolymère à blocs présente en outre une température de transition vitreuse ("tg") inférieure ou égale à à - 20°C, plus préférentiellement inférieure à - 40°C. Une valeur de Tg supérieure à ces minima peut diminuer les performances de la couche étanche lors d'une utilisation à très basse température ; pour une telle utilisation, la Tg du bloc polyisobutylène est plus préférentiellement encore inférieure à - 50°C.

Selon l'invention, le bloc polyisobutylène du copolymère à blocs comprend également un taux d'unités issues d'un ou de plusieurs diènes conjugués insérées dans la chaîne polymérique allant de 0,5% à 6% en poids par rapport au poids du bloc polyisobutylène. En dessous de 0,5%, on observe une dégradation de la propriété d'adhésion de la composition contenant le copolymère à blocs de l'invention sur les compositions de caoutchouc adjacentes dans le pneumatique. Au dessus de 6%, on observe une baisse de la résistance à la thermooxydation et à l'oxydation à l'ozone de la composition contenant le copolymère à blocs de l'invention utilisée dans un pneumatique. Ce taux est préférentiellement compris dans le domaine allant de 1,5% et 5% en poids et plus préférentiellement encore de 2% à 4% en poids.

Les diènes conjugués pouvant être copolymérisés avec l'isobutylène pour constituer le bloc polyisobutylène sont des diènes conjugués en C₄ - C₁₄. De préférence, ces diènes conjugués sont choisis parmi l'isoprène, le butadiène, le 1-méthylbutadiène, le 2- méthylbutadiène, le 2,3-diniéthyl-1,3-butadiène, le 2,4-diméthyl-1,3-butadiène, le 1,3-pentadiène, le 2-méthyl-1,3-pentadiène, le 3-méthyl-1,3-pentadiène, le 4-méthyl-1,3-pentadiène, le 2,3-diméthyl-1,3-pentadiène, le 1,3-hexadiène, le 2-niéthyl-1,3-hexadiène, le 3-méthyl-1,3-hexadiène, le 4-méthyl-1,3-hexadiène, le 5-méthyl-1,3-hexadiène, le 2,3-diméthyl-1,3-hexadiène, le 2,4--diméthyl-1,3-hexadiène, le 2,5-diméthyl-1,3-hexadiène, le 2-neopentylbutadiène, le 1,3-cyclopentadiène, le 1,3-cyclohexadiène, 1-vinyl-1,3-cyclohexadiène ou leur mélange. Plus préférentiellement le diène conjugué est l'isoprène ou un mélange contenant de l'isoprène.

Le bloc polyisobutylène, selon un aspect avantageux de l'invention, peut être halogéné et comporté des atomes d'halogène dans sa chaîne. Cette halogénation permet d'augmenter la vitesse de cuisson de la composition comprenant le copolymère à blocs selon l'invention.. Cette halogénation permet d'améliorer la compatibilité du TPE avec les autres éléments constitutifs de la composition à base de TPE utilisée dans l'application gomme interne d'un bandage pneumatique. L'halogénation se fait au moyen de brome ou de chlore, préférentiellement du brome, sur les unités issues de diènes conjugués de la chaîne polymérique du bloc polyisobutylène. Seule une partie de ces unités réagit avec l'halogène. Cette partie d'unités issues de diènes conjugués réactive doit néanmoins être telle que le taux d'unités issues de diènes conjugués n'ayant pas réagi avec l'halogène soit d'au moins 0,5% en poids par rapport au poids du bloc polyisobutylène.

Selon une variante de l'invention énoncée plus haut, le bloc polyisobutylène du copolymère à blocs peut être étoilé à au moins trois branches. De préférence le nombre de branches est compris dans un domaine allant de 3 à 6.

Selon l'invention, le ou les blocs styréniques terminaux représentent au plus 16% en poids du poids total du copolymère à blocs, de préférence moins de 15% en poids. Au delà de cette valeur de 16% en poids, on observe une cohésion à chaud insuffisante de la composition comprenant le copolymère à blocs selon l'invention. Ceci se traduit notamment, par une augmentation du module rendant impossible la déformation plastique de ce matériau lors de la conformation du pneu..

Le ou les blocs styréniques doivent être présent dans des proportions suffisantes pour préserver le caractère thermoplastique de l'élastomère SIBS. Le taux minimum de blocs styréniques du copolymère à blocs peut varier en fonction des conditions d'utilisation du copolymère. A titre d'exemple, un taux minimum de 5% en poids du poids total du copolymère à blocs, peut être envisagé pour une application pneumatique.

Les blocs styréniques sont constitués d'un ou de plusieurs composés styréniques polymérisés. Par composé styrénique doit être entendu dans la présente description tout monomère à base de styrène, non substitué comme substitué ; parmi les styrènes substitués peuvent être cités par exemple les méthylstyrènes (par exemple l'o-méthylstyrène, le m-méthylstyrène ou le p-méthylstyrène, l'alpha-méthylstyrène, l'alpha-2-diméthylstyrène, l'alpha-4-diméthylstyrène ou le diphényléthylène,), les butylstyrènes (par exemple le para-tertio-butylstyrène), les chlorostyrènes (par exemple l'o-chlorostyrène, le m-chlorostyrène, le p-chlorostyrène, le 2,4-dichlorostyrène, le 2,6-dichlorostyrène ou le 2,4,6-trichlorostyrène), les bromostyrènes (par exemple l'o-bromostyrène, le m-bromostyrène, le p-bromostyrène, le 2,4-dibromostyrène, le 2,6-dibromostyrène ou les 2,4,6-tribromostyrène), les fluorostyrènes (par exemple l'o-fluorostyrène, le m-fluorostyrène, le p-fluorostyrène, le 2,4-difluorostyrène, le 2,6-difluorostyrène ou les 2,4,6-trifluorostyrène) ou encore le para-hydroxy-styrène. De préférence, le composé styrénique selon l'invention est le styrène, l'alpha-méthylstyrène, le diphényléthylène, le p-méthylstyrène, le p-tertiobutylstyrène, le p-chlorostyrène ou le p-fluorostyrène.

Les copolymères selon l'invention peuvent être préparés par des procédés de synthèse connus en soi et décrit dans la littérature, notamment celle citée dans la présentation de l'état de la technique de la présente description. L'homme du métier saura choisir les conditions de polymérisation adéquates et réguler les différents paramètres des procédés de polymérisation afin d'aboutir aux caractéristiques spécifiques de structure du copolymère à blocs de l'invention.

Plusieurs stratégies de synthèse peuvent être mises en oeuvre en vue de préparer les copolymères selon l'invention.

Une première consiste en une première étape de synthèse du bloc « polyisobutylène » par polymérisation cationique vivante des monomères à polymériser au moyen d'un amorceur di-fonctionnel ou poly-fonctionnel connu de l'homme de l'art, suivie de la seconde étape de synthèse des blocs styréniques par ajout des monomères styréniques à polymériser sur le « polyisobutylène » vivant obtenu dans la première étape. Ainsi, ces deux étapes sont consécutives, ce qui se traduit par l'ajout séquencé :
- des monomères à polymériser pour la préparation du bloc « polyisobutylène » comprenant un taux d'unités issues d'un ou de plusieurs diènes conjugués allant de 0,5 à 6% en poids du poids total du bloc isobutylène ;
- des monomères à polymériser pour la préparation des blocs styréniques.

A chaque étape, le ou les monomères à polymériser peuvent ou non être ajoutés sous la forme d'une solution dans un solvant tel que décrit ci-après, en présence ou non d'un acide ou d'une base de Lewis tels que décrits ci-après.

Chacune de ces étapes peut être réalisée dans un même réacteur ou dans deux réacteurs de polymérisation différents. A titre préférentiel, ces deux étapes sont réalisées dans un seul et unique réacteur (synthèse en « one-pot »).

La polymérisation cationique vivante s'effectue classiquement en moyen d'un amorceur et éventuellement d'un acide de Lewis jouant le rôle de co-amorceur afin de former *in situ* un carbocation. Habituellement sont ajoutés de composéss électro-donneurs afin de conférer à la polymérisation un caractère vivant.

A titre d'illustration, les amorceurs di-fonctionnels ou polyfonctionnels utilisables pour la préparation des copolymères selon l'invention peuvent être choisis parmi le 1,4-di(2-méthoxy-2-propyl)-benzene (ou « dicumylmethyl ether »), le 1,3,5-tri(2-methoxy-2-propyl)-benzene (ou « tricumylmethylether »), le 1,4-di(2-chloro-2-propyl)-benzene (ou « dicumyl chloride »), le 1,3,5-tri(2-chloro-2-propyl)-benzene (ou « tricumyl chloride), le 1,4-di(2-hydroxy-2-propyl)-benzene, le 1,3,5-tri(2-hydroxy-2-propyl)-benzene, le 1,4-di(2-acetoxy-2-propyl)-benzene, le 1,3,5-tri(2-acetoxy-2-propyl)-benzene, le 2,6-dichloro-2,4,4,6-tetramethylheptane, le 2,6-dihydroxy-2,4,4,6-heptane. A titre préférentiel, sont utilisés les dicumyl éthers, les tricumyl éthers, les halogénures de dicumyl ou les halogénures de tricumyl.

Les acides de Lewis peuvent être choisis parmi les halogénures de métaux, de formule générale MXₙ où M est un élément choisi parmi Ti, Zr, Al, Sn, P, B, X est un halogène tel que Cl, Br, F ou I et n correspondant au degré d'oxydation de l'élément M. On citera par exemple TiCl₄, AlCl₃, BCl₃, BF₃, SnCl₄, PCl₃, PCl₅,. Les composés TiCl₄, AlCl₃ et BCl₃ sont utilisés à titre préférentiel, et TiCl₄ à titre encore plus préférentiel.

Les composés électro-donneurs peuvent être choisis parmi les bases de Lewis connues, tels que les pyridines, les amines, les amides, les esters, les sulfoxydes et autres. Parmi eux sont préférés le DMSO (dimethylsulfoxyde) et le DMAc (diméthylacétamide).

La polymérisation cationique vivante s'effectue dans un solvant inerte apolaire ou dans un mélange de solvants inertes apolaire et polaire.

Les solvants apolaires pouvant être utilisés pour la synthèse des copolymères selon l'invention sont par exemple les solvants hydrocarbonés, aliphatiques, cycloaliphatiques ou aromatiques, tels que l'hexane, l'heptane, le cyclohexane, le méthylcyclohexane, le benzène ou le toluène.

Les solvants polaires pouvant être utilisés pour la synthèse des copolymères selon l'invention sont par exemple les solvants halogénés tels que les halogénures d'alcane, comme le chlorure de méthyle (ou chloroforme), le chlorure d'éthyle, le chlorure de butyle, le chlorure de méthylène (ou dichlorométhane) ou les chlorobenzènes (mono-, di- ou tri-chloro).

L'homme du métier saura choisir la composition des mélanges de monomères à utiliser en vue de préparer les copolymères selon l'invention ainsi que les conditions de température adéquates en vue d'atteindre les caractéristiques de masses molaires de ces copolymères.

Une deuxième stratégie de synthèse consiste à préparer séparément :
- un bloc « polyisobutylène » téléchélique ou fonctionnel à ses extrémités de chaînes par polymérisation cationique vivante au moyen d'un amorceur difonctionnel ou polyfonctionnel, suivie éventuellement de réaction de fonctionnalisation sur les extrémités de chaînes,
- les blocs styréniques vivants par exemple par polymérisation anionique,
puis à faire réagir l'un et l'autre pour l'obtention d'un copolymère selon l'invention. La nature des fonctions réactives à chacune des extrémités de chaînes du bloc et la proportion de blocs styréniques vivants par rapport au bloc seront choisies par l'homme du métier pour l'obtention d'un copolymère selon l'invention.

L'halogénation du copolymère selon l'invention obtenu selon l'une ou l'autre des stratégies de synthèse est réalisée selon toute méthode connue de l'homme de l'art, notamment celles utilisées pour l'halogénation du caoutchouc butyle et peut se faire par exemple au moyen de brome ou de chlore, préférentiellement du brome, sur les unités issues de diènes conjugués de la chaîne polymérique du bloc polyisobutylène.

Dans certaines variantes de l'invention selon lesquelles l'élastomère SIBS est étoilé ou encore branché, les procédés décrits par exemple dans les articles de Puskas J. Polym. Sci Part A : Polymer Chemistry, vol 36, pp85-82 (1998) et Puskas, J. Polym. Sci Part A : Polymer Chemistry, vol 43, pp1811-1826 (2005) peuvent être mis en oeuvre par analogie pour obtenir des blocs centraux "polyisobutylène" étoilés, branchés ou dendrimères vivants. L'homme du métier saura alors choisir la composition des mélanges de monomères à utiliser en vue de préparer les copolymères selon l'invention ainsi que les conditions de température adéquates en vue d'atteindre les caractéristiques de masses molaires de ces copolymères.

A titre préférentiel, la préparation des copolymères selon l'invention sera réalisée par polymérisation cationique vivante au moyen d'un amorceur difonctionnel ou polyfonctionnel et par ajout séquencés des monomères à polymériser pour la synthèse du bloc « polyisobutène » et des monomères à polymérisation pour la synthèse des blocs styréniques.

La présente invention n'est pas restreinte à un procédé de polymérisation spécifique à partir d'un tel mélange de monomères. Ce type de procédé est connu de l'homme de l'art. Ainsi des synthèses décrites dans l'art antérieur, notamment dans les documents brevet EP 731 112, US 4 946 899, US 5 260 383, peuvent être mise en oeuvre par analogie pour préparer le nouvel élastomère SIBS selon l'invention.

L'élastomère SIBS peut constituer à lui seul la couche élastomère étanche aux gaz ou bien être associé, dans cette couche élastomère, à d'autres constituantes pour former une composition élastomère.

Si d'éventuels autres élastomères sont utilisés dans cette composition, le nouvel élastomère SIBS selon l'invention constitue l'élastomère majoritaire en poids ; il représente alors de préférence plus de 50%, plus préférentiellement plus de 70% en poids de l'ensemble des élastomères. De tels élastomères complémentaires, de préférence minoritaires, pourraient être par exemple des élastomères diéniques tels que du caoutchouc naturel ou un polyisoprène synthétique, un caoutchouc butyl ou des élastomères thermoplastiques styréniques (TPS) autres que SIBS, dans la limite de la compatibilité de leurs microstructures.

A titre d'élastomère TPS autre que SIBS utilisable en complément du SIBS précédemment décrit peut être cité notamment un élastomère TPS choisi dans le groupe constitué par les copolymères blocs styrène/ butadiène/ styrène, les copolymères blocs styrène/ isoprène/ styrène, les copolymères blocs styrène/isoprène/ butadiène/ styrène, les copolymères blocs styrène/ éthylène/ butylène/styrène, les copolymères blocs styrène/ éthylène/ propylène/ styrène, les copolymères blocs styrène/ éthylène/ éthylène/ propylène/ styrène et les mélanges de ces copolymères. Plus préférentiellement, ledit élastomère TPS complémentaire éventuel est choisi dans le groupe constitué par les copolymères blocs styrène/éthylène/ butylène/ styrène, les copolymères blocs styrène/ éthylène/ propylène/styrène et les mélanges de ces copolymères.

Toutefois, selon un mode de réalisation préférentiel, l'élastomère SIBS est le seul élastomère, et le seul élastomère thermoplastique présent dans la composition ou couche élastomère étanche aux gaz.

L'élastomère SIBS précédemment décrit est suffisant à lui seul pour que soit remplie la fonction d'étanchéité aux gaz vis-à-vis des objets pneumatiques dans lesquels il est utilisé.

Toutefois, selon un mode de réalisation préférentiel de l'invention, ce dernier est utilisé dans une composition qui comporte également, à titre d'agent plastifiant, une huile d'extension (ou huile plastifiante) dont la fonction est de faciliter la mise en oeuvre, particulièrement l'intégration dans l'objet pneumatique par un abaissement du module et une augmentation du pouvoir tackifiant de la couche étanche aux gaz

On peut utiliser toute huile d'extension, de préférence à caractère faiblement polaire, apte à étendre, plastifier des élastomères, notamment thermoplastiques. A température ambiante (23°C), ces huiles, plus ou moins visqueuses, sont des liquides (c'est-à-dire, pour rappel, des substances ayant la capacité de prendre à terme la forme de leur contenant), par opposition notamment à des résines ou des caoutchoucs qui sont par nature solides.

De préférence, l'huile d'extension est choisie dans le groupe constitué par les huiles polyoléfiniques (c'est-à-dire issues de la polymérisation d'oléfines, monooléfines ou dioléfines), les huiles paraffiniques, les huiles naphténiques (à basse ou haute viscosité), les huiles aromatiques, les huiles minérales, et les mélanges de ces huiles.

Il est à noter que l'ajout d'une huile d'extension au SIBS entraîne une perte d'étanchéité de ce dernier, variable selon le type et la quantité d'huile utilisée. On utilise préférentiellement une huile du type polybutène, en particulier une huile polyisobutylène (en abrégé "PIB"), qui a démontré le meilleur compromis de propriétés comparativement aux autres huiles testées, notamment à une huile conventionnelle du type paraffinique.

A titre d'exemples, des huiles polyisobutylène sont commercialisées notamment par la société UNIVAR sous la dénomination "Dynapak Poly" (e.g. "Dynapak Poly 190"), par INEOS Oligomer sous la dénomination INDOPOL H1200, par BASF sous les dénominations "Glissopal" (e.g. "Glissopal 1000") ou "Oppanol" (e.g. "Oppanol B12") ; des huiles paraffiniques sont commercialisées par exemple par EXXON sous la dénomination "Telura 618" ou par Repsol sous la dénomination "Extensol 51".

La masse moléculaire moyenne en nombre (Mn) de l'huile d'extension est préférentiellement comprise entre 200 et 25 000 g/mol, plus préférentiellement encore comprise entre 300 et 10 000 g/mol. Pour des masses Mn trop basses, il existe un risque de migration de l'huile à l'extérieur de la composition, tandis que des masses trop élevées peuvent entraîner une rigidification excessive de cette composition. Une masse Mn comprise entre 350 et 4 000 g/mol, en particulier entre 400 et 3 000 g/mol, s'est avérée constituer un excellent compromis pour les applications visées, en particulier pour une utilisation dans un bandage pneumatique.

La masse moléculaire moyenne en nombre (Mn) de l'huile d'extension est déterminée par SEC, l'échantillon étant préalablement solubilisé dans du tétrahydrofuranne à une concentration d'environ 1 g/l ; puis la solution est filtrée sur filtre de porosité 0,45µm avant injection. L'appareillage est la chaîne chromatographique "WATERS alliance". Le solvant d'élution est le tétrahydrofuranne, le débit de 1 ml/min, la température du système de 35°C et la durée d'analyse de 30 min. On utilise un jeu de deux colonnes "WATERS" de dénomination "STYRAGEL HT6E". Le volume injecté de la solution de l'échantillon de polymère est de 100 µl. Le détecteur est un réfractomètre différentiel "WATERS 2410" et son logiciel associé d'exploitation des données chromatographiques est le système "WATERS MILLENIUM". Les masses molaires moyennes calculées sont relatives à une courbe d'étalonnage réalisée avec des étalons de polystyrène.

L'homme du métier saura, à la lumière de la description et des exemples de réalisation qui suivent, ajuster la quantité d'huile d'extension en fonction des conditions particulières d'usage de la couche élastomère étanche aux gaz, notamment de l'objet pneumatique dans lequel elle est destinée à être utilisée.

On préfère que le taux d'huile d'extension soit supérieur à 5 pce, de préférence compris entre 5 et 100 pce (parties en poids pour cent parties d'élastomère total, c'est-à-dire SIBS plus tout autre élastomère éventuel présent dans la composition ou couche élastomère).

En dessous du minimum indiqué, la composition élastomère risque de présenter une rigidité trop forte pour certaines applications tandis qu'au-delà du maximum préconisé, on s'expose à un risque de cohésion insuffisante de la composition et de perte d'étanchéité pouvant être néfaste selon l'application considérée.

Pour ces raisons, en particulier pour une utilisation de la composition étanche dans un bandage pneumatique, on préfère que le taux d'huile d'extension soit supérieur à 10 pce, notamment compris entre 10 et 90 pce, plus préférentiellement encore qu'il soit supérieur à 20 pce, notamment compris entre 20 et 80 pce.

La couche ou composition étanche à l'air décrite ci-dessus peut comporter par ailleurs les divers additifs usuellement présents dans les couches étanches à l'air connues de l'homme du métier. On citera par exemple des charges renforçantes telles que du noir de carbone ou de la silice, des charges non renforçantes ou inertes, des agents colorants avantageusement utilisables pour la coloration de la composition, des charges lamellaires améliorant encore l'étanchéité (e.g. phyllosilicates tels que kaolin, talc, mica, graphite, argiles ou argiles modifiées ("organo clays"), des plastifiants autres que les huiles d'extension précitées, des agents de protection tels que antioxydants ou antiozonants, anti-UV, divers agents de mise en oeuvre ou autres stabilisants, ou encore des promoteurs aptes à favoriser l'adhésion au reste de la structure de l'objet pneumatique.

Outre les élastomères (SIBS et autres élastomères éventuels) précédemment décrits, la composition étanche aux gaz pourrait aussi comporter, toujours selon une fraction pondérale minoritaire par rapport à l'élastomère SIBS, des polymères autres que des élastomères, tels que par exemple des polymères thermoplastiques compatibles avec l'élastomère SIBS.

La couche ou composition étanche aux gaz précédemment décrite est un composé solide (à 23°C) et élastique, qui se caractérise notamment, grâce à sa formulation spécifique, par une très haute souplesse et très haute déformabilité.

Selon un mode de réalisation préférentiel de l'invention, cette couche ou composition étanche aux gaz présente un module sécant en extension, à 10% d'allongement (noté M10), qui est inférieur à 2 MPa, plus préférentiellement inférieur à 1,5 MPa (notamment inférieur à 1 MPa). Cette grandeur est mesurée en première élongation (c'est-à-dire sans cycle d'accommodation) à une température de 23°C, avec une vitesse de traction de 500 mm/min (norme ASTM D412), et rapportée à la section initiale de l'éprouvette.

La couche ou composition à base de SIBS précédemment décrite est utilisable comme couche étanche à l'air dans tout type d'objet pneumatique. A titre d'exemples de tels objets pneumatiques, on peut citer les bateaux pneumatiques, les ballons ou balles utilisées pour le jeu ou le sport.

Elle est particulièrement bien adaptée à une utilisation comme couche étanche à l'air (ou tout autre gaz de gonflage, par exemple azote) dans un objet pneumatique, produit fini ou semi-fini, en caoutchouc, tout particulièrement dans un bandage pneumatique pour véhicule automobile tel qu'un véhicule de type deux roues, tourisme ou industriel.

Une telle couche étanche à l'air est préférentiellement disposée sur la paroi interne de l'objet pneumatique, mais elle peut être également intégrée complètement à sa structure interne.

L'épaisseur de la couche étanche à l'air est préférentiellement supérieure à 0,05 mm, plus préférentiellement comprise entre 0,1 mm et 10 mm (notamment entre 0,1 et 1,0 mm).

On comprendra aisément que, selon les domaines d'application spécifiques, les dimensions et les pressions en jeu, le mode de mise en oeuvre de l'invention peut varier, la couche étanche à l'air comportant alors plusieurs gammes d'épaisseur préférentielles.

Ainsi par exemple, pour des bandages pneumatiques de type tourisme, elle peut avoir une épaisseur d'au moins 0,4 mm, préférentiellement comprise entre 0,8 et 2 mm. Selon un autre exemple, pour des bandages pneumatiques de véhicules poids lourds ou agricole, l'épaisseur préférentielle peut se situer entre 1 et 3 mm. Selon un autre exemple, pour des bandages pneumatiques de véhicules dans le domaine du génie civil ou pour avions, l'épaisseur préférentielle peut se situer entre 2 et 10mm.

Comparativement à une couche étanche à l'air usuelle à base de caoutchouc butyl, la composition étanche à l'air décrite ci-dessus a l'avantage de présenter une hystérèse nettement plus faible, et présage donc d'offrir une résistance au roulement réduite aux bandages pneumatiques.

Par ailleurs, ce nouvel élastomère SIBS induit, à la composition étanche à l'air qui le contient, une forte capacité d'adhésion sur les composants en caoutchouc de l'objet pneumatique, notamment bandage pneumatique, qui lui sont adjacents.

En outre, ce nouvel élastomère SIBS, malgré sa nature thermoplastique, confère à la composition étanche à l'air qui le contient une bonne cohésion à chaud du matériau, notamment à des températures allant de 150 à 200°C. Ces températures correspondent aux températures cuisson de bandages pneumatiques. Cette cohésion à haute température permet un démoulage à chaud de ces pneumatiques sans altérer l'intégrité de la composition étanche contenant le nouvel élastomère SIBS.

Aussi, le nouvel élastomère thermoplastique SIBS selon l'invention permet-il, de manière surprenante, de satisfaire un compromis de propriétés, souvent antinomiques, de cohésion à chaud de la composition qui le contient et d'adhésion de celle-ci sur les compositions de caoutchouc qui lui sont adjacentes dans l'objet pneumatique. Ce compromis de propriété est atteint tout en conservant les propriétés d'étanchéité et l'aptitude à la mise en oeuvre de la composition comprenant ce SIBS, ainsi qu'en conférant des propriétés d'hystérèse améliorées (comparé au caoutchouc butyle) en tant que gomme intérieure pour bandage pneumatique.

L'invention ainsi que ses avantages seront aisément compris à la lumière de la description ainsi que de la figure unique qui schématise, en coupe radiale, un bandage pneumatique conforme à l'invention.

La couche élastomère étanche aux gaz précédemment décrite est avantageusement utilisable dans les bandages pneumatiques de tous types de véhicules, en particulier véhicules tourisme ou véhicules industriels tels que Poids-lourd.

A titre d'exemple, la figure unique annexée représente de manière très schématique (sans respect d'une échelle spécifique), une coupe radiale d'un bandage pneumatique conforme à l'invention.

Ce bandage pneumatique 1 comporte un sommet 2 renforcé par une armature de sommet ou ceinture 6, deux flancs 3 et deux bourrelets 4, chacun de ces bourrelets 4 étant renforcé avec une tringle 5. Le sommet 2 est surmonté d'une bande de roulement non représentée sur cette figure schématique. Une armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est de manière connue en soi constituée d'au moins une nappe renforcée par des câbles dits "radiaux", par exemple textiles ou métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

La paroi interne du bandage pneumatique 1 comporte une couche 10 étanche à l'air, par exemple d'épaisseur égale à environ 0,9 mm, du côté de la cavité interne 11 du bandage pneumatique 1.

Cette couche interne (ou "inner liner") couvre toute la paroi interne du bandage pneumatique, se prolongeant d'un flanc à l'autre, au moins jusqu'au niveau du crochet de jante lorsque le bandage pneumatique est en position montée. Elle définit la face radialement interne dudit bandage destinée à protéger l'armature de carcasse de la diffusion d'air provenant de l'espace 11 intérieur au bandage. Elle permet le gonflement et le maintien sous pression du bandage pneumatique ; ses propriétés d'étanchéité doivent lui permettre de garantir un taux de perte de pression relativement faible, de maintenir le bandage gonflé, en état de fonctionnement normal, pendant une durée suffisante, normalement de plusieurs semaines ou plusieurs mois.

Contrairement à un bandage pneumatique conventionnel utilisant une composition à base de caoutchouc butyle, le bandage pneumatique conforme à l'invention utilise dans cet exemple, comme couche 10 étanche à l'air, un nouvel élastomère SIBS tel que décrit plus haut.

Le pneumatique pourvu de sa couche étanche à l'air (10) tel que décrit ci-dessus peut être réalisé avant ou après vulcanisation (ou cuisson).

Dans le premier cas (i.e., avant cuisson du bandage pneumatique), la couche étanche à l'air est simplement appliquée de façon conventionnelle à l'endroit souhaité, pour formation de la couche 10. La vulcanisation est ensuite effectuée classiquement. Les élastomères SIBS supportent bien les contraintes liées à l'étape de vulcanisation.

Une variante de fabrication avantageuse, pour l'homme du métier des bandages pneumatiques, consistera par exemple au cours d'une première étape, à déposer à plat la couche étanche à l'air directement sur un tambour de confection, sous la forme d'une couche ("skim") d'épaisseur adaptée, avant de recouvrir cette dernière avec le reste de la structure du bandage pneumatique, selon des techniques de fabrication bien connues de l'homme du métier.

Dans le second cas (i.e., après cuisson du bandage pneumatique), la couche étanche est appliquée à l'intérieur du bandage pneumatique cuit par tout moyen approprié, par exemple par collage, par pulvérisation ou encore extrusion et soufflage d'un film d'épaisseur appropriée.

## Revendications

1. Objet pneumatique pourvu d'une couche élastomère étanche aux gaz de gonflage, **caractérisé en ce que** ladite couche élastomère comporte au moins, à titre d'élastomère majoritaire, un élastomère thermoplastique SIBS sous forme d'un copolymère à blocs constitué
1) d'un bloc polyisobutylène présentant une masse moléculaire moyenne en nombre allant de 25 000 g/mol à 350 000 g/mol et une température de transition vitreuse inférieure ou égale à -20°C, et comprend un taux d'unités issues d'un ou de plusieurs diènes conjugués insérées dans la chaîne polymérique allant de 0,5% à 6% en poids par rapport au poids du bloc polyisobutylène, et
2) à au moins une des extrémités du bloc polyisobutylène, d'un bloc styrénique constitué d'au moins un composé styrénique polymérisé, les blocs styréniques représentant au plus 16% en poids du poids total du copolymère à blocs.

2. Objet pneumatique selon la revendication 1, **caractérisé en ce que** le copolymère présente une structure linéaire tribloc.

3. Objet pneumatique selon la revendication 1, **caractérisé en ce que** le copolymère présente une structure étoilée à au moins 3 branches et au plus 12 branches dans lequel le bloc polyisobutylène central est étoilé à au moins 3 et au plus 12 branches, chacune étant terminée par un bloc styrénique.

4. Objet pneumatique selon la revendication 1, **caractérisé en ce que** le copolymère présente une structure dendrimère dans lequel le bloc polyisobutylène central est dendrimère, chacune des branches du polyisobutylène dendrimère étant terminée par un bloc styrénique

5. Objet pneumatique selon l'une quelconque des revendications 1 à 4, **caractérisé en ce que** le bloc polyisobutylène comprend un taux d'unités issues d'un ou de plusieurs diènes conjugués insérées dans la chaîne polymérique allant de 1,5% à 5% en poids par rapport au poids du bloc polyisobutylène,

6. Objet pneumatique l'une quelconque des revendications 1 à 5, **caractérisé en ce que** le bloc polyisobutylène présente une température de transition vitreuse inférieure ou égale à -50°C

7. Objet pneumatique l'une quelconque des revendications 1 à 6, **caractérisé en ce que** le bloc polyisobutylène est halogéné.

8. Objet pneumatique selon l'une quelconque des revendications précédentes, **caractérisé en ce que** les blocs styréniques représentent moins de 15% en poids du poids total du copolymère à blocs.

9. Objet pneumatique selon l'une quelconque des revendications précédentes, dans lequel la masse Mn de l'élastomère SIBS est comprise entre 40 000 et 400 000 g/mol.

10. Objet pneumatique selon l'une quelconque des revendications précédentes, dans lequel la couche étanche comporte une huile d'extension de l'élastomère.

11. Objet pneumatique selon la revendication 10, dans lequel la masse moléculaire moyenne en nombre (Mn) de l'huile d'extension est comprise entre 350 et 4 000 g/mol.

12. Objet pneumatique selon la revendication 11, dans lequel le taux d'huile d'extension est supérieur à 5 pce, de préférence compris entre 5 et 100 pce.

13. Objet pneumatique selon l'une quelconque des revendications précédentes, dans lequel la couche étanche a une épaisseur comprise entre 0,1 mm et 10 mm, de préférence comprise entre 0,1 et 1,0 mm.

14. Objet pneumatique selon la revendication 13, dans lequel la couche étanche est disposée sur la paroi interne de l'objet pneumatique.

15. Objet pneumatique selon l'une quelconque des revendications 1 à 14, **caractérisé en ce que** ledit objet est un bandage pneumatique.

16. Objet pneumatique selon l'une quelconque des revendications 1 à 14, **caractérisé en ce que** ledit objet pneumatique est une chambre à air.

17. Procédé pour étanchéifier un objet pneumatique vis-à-vis des gaz de gonflage, dans lequel on incorpore audit objet pneumatique lors de sa fabrication, ou on ajoute audit objet pneumatique après sa fabrication, une couche élastomère étanche aux gaz telle que définie dans l'une quelconque des revendications 1 à 13.

18. Procédé selon la revendication 17, dans lequel la couche élastomère étanche est déposée sur la paroi interne de l'objet pneumatique.

19. Procédé selon la revendication 18, pour étanchéifier un bandage pneumatique dans lequel au cours d'une première étape, la couche élastomère étanche est déposée à plat sur un tambour de confection, avant de recouvrir ladite couche du reste de la structure du bandage pneumatique

20. Utilisation comme couche étanche aux gaz de gonflage, dans un objet pneumatique, d'une couche élastomère telle que définie dans l'une quelconque des revendications 1 à 13.

## Claims

1. Inflatable article equipped with an elastomer layer impermeable to inflation gases, **characterized in that** said elastomer layer comprises at least, as the predominant elastomer, a thermoplastic SIBS elastomer in the form of a block copolymer composed:
1) of a polyisobutylene block having a number-average molecular weight ranging from 25 000 g/mol to 350 000 g/mol and a glass transition temperature of less than or equal to -20°C, and comprising an amount of units derived from one or more conjugated dienes inserted in the polymer chain ranging from 0.5% to 6% by weight relative to the weight of the polyisobutylene block; and
2) at at least one of the ends of the polyisobutylene block, of a styrenic block composed of at least one polymerized styrenic compound, the styrenic blocks representing at most 16% by weight of the total weight of the block copolymer.

2. Inflatable article according to Claim 1, **characterized in that** the copolymer has a linear triblock structure.

3. Inflatable article according to Claim 1, **characterized in that** the copolymer has a star-shaped structure with at least 3 branches and at most 12 branches in which the central polyisobutylene block is star-shaped with at least 3 and at most 12 branches, each branch being terminated by a styrenic block.

4. Inflatable article according to Claim 1, **characterized in that** the copolymer has a dendrimer structure in which the central polyisobutylene block is dendritic, each of the branches of the dendritic polyisobutylene being terminated by a styrenic block.

5. Inflatable article according to any one of Claims 1 to 4, **characterized in that** the polyisobutylene block comprises an amount of units derived from one or more conjugated dienes inserted in the polymer chain ranging from 1.5% to 5% by weight relative to the weight of the polyisobutylene block.

6. Inflatable article according to any one of Claims 1 to 5, **characterized in that** the polyisobutylene block has a glass transition temperature of less than or equal to -50°C.

7. Inflatable article according to any one of Claims 1 to 6, **characterized in that** the polyisobutylene block is halogenated.

8. Inflatable article according to any one of the preceding claims, **characterized in that** the styrenic blocks represent less than 15% by weight of the total weight of the block copolymer.

9. Inflatable article according to any one of the preceding claims, in which the weight Mₙ of the SIBS elastomer is between 40 000 and 400 000 g/mol.

10. Inflatable article according to any one of the preceding claims, in which the airtight layer comprises an extension oil for the elastomer.

11. Inflatable article according to Claim 10, in which the number-average molecular weight (Mₙ) of the extender oil is between 350 and 4000 g/mol.

12. Inflatable article according to Claim 11, in which the content of extender oil is greater than 5 phr, preferably between 5 and 100 phr.

13. Inflatable article according to any one of the preceding claims, in which the airtight layer has a thickness between 0.1 mm and 10 mm, preferably between 0.1 and 1.0 mm.

14. Inflatable article according to Claim 13, in which the airtight layer is positioned on the inner wall of the inflatable article.

15. Inflatable article according to any one of Claims 1 to 14, **characterized in that** said article is a pneumatic tyre.

16. Inflatable article according to any one of Claims 1 to 14, **characterized in that** said inflatable article is an inner tube.

17. Process for sealing an inflatable article with respect to inflation gases, in which a gastight elastomer layer as defined in any one of Claims 1 to 13 is incorporated into said inflatable article during its manufacture or is added to said inflatable article after its manufacture.

18. Process according to Claim 17, in which the airtight elastomer layer is deposited on the inner wall of the inflatable article.

19. Process according to Claim 18, in which, during a first step, the airtight elastomer layer is laid down directly onto a building drum, before said layer is covered with the rest of the structure of the pneumatic tyre.

20. Use, as a layer that is impermeable to the inflation gases, in an inflatable article, of an elastomer layer as defined in any one of Claims 1 to 13.

## Patentansprüche

1. Pneumatisches Objekt, das mit einer aufpumpgasdichten Elastomerschicht versehen ist, **dadurch gekennzeichnet, dass** die Elastomerschicht mindestens als überwiegendes Elastomer ein thermoplastisches SIBS-Elastomer in Form eines Blockcopolymers aus
1) einem Polyisobutylenblock mit einem zahlenmittleren Molekulargewicht von 25.000 g/mol bis 350.000 g/mol und einer Glasübergangstemperatur kleiner gleich -20°C und einem Gehalt an Einheiten, die sich von einem oder mehreren in die Polymerkette insertierten konjugierten Dienen ableiten, von 0,5 bis 6 Gew.-%, bezogen auf das Gewicht des Polyisobutylenblocks, und
2) einem Styrolblock aus mindestens einer polymerisierten Styrolverbindung an mindestens einem der Enden des Polyisobutylenblocks, wobei die Styrolblöcke höchstens 16 Gew.-% des Gesamtgewichts des Blockcopolymers ausmachen,
umfasst.

2. Pneumatisches Objekt nach Anspruch 1, **dadurch gekennzeichnet, dass** das Copolymer eine lineare Dreiblockstruktur aufweist.

3. Pneumatisches Objekt nach Anspruch 1, **dadurch gekennzeichnet, dass** das Copolymer eine sternverzweigte Struktur mit mindestens 3 Armen und höchstens 12 Armen aufweist, wobei der zentrale Polyisobutylenblock mit mindestens 3 und höchstens 12 Armen sternverzweigt ist, wobei jeder der Arme durch einen Styrolblock terminiert ist.

4. Pneumatisches Objekt nach Anspruch 1, **dadurch gekennzeichnet, dass** das Copolymer eine dendrimere Struktur aufweist, in der der zentrale Polyisobutylenblock dendrimer ist, wobei jeder der Arme des dendrimeren Polyisobutylens durch einen Styrolblock terminiert ist.

5. Pneumatisches Objekt nach einem der Ansprüche 1 bis 4, **dadurch gekennzeichnet, dass** der Polyisobutylenblock einen Gehalt an Einheiten, die sich von einem oder mehreren in die Polymerkette insertierten konjugierten Dienen ableiten, von 1,5 bis 5 Gew.-%, bezogen auf das Gewicht des Polyisobutylenblocks, aufweist.

6. Pneumatisches Objekt nach einem der Ansprüche 1 bis 5, **dadurch gekennzeichnet, dass** der Polyisobutylenblock eine Glasübergangstemperatur kleiner gleich -50°C aufweist.

7. Pneumatisches Objekt nach einem der Ansprüche 1 bis 6, **dadurch gekennzeichnet, dass** der Polyisobutylenblock halogeniert ist.

8. Pneumatisches Objekt nach einem der vorhergehenden Ansprüche, **dadurch gekennzeichnet, dass** die Styrolblöcke weniger als 15 Gew.-% des Gesamtgewichts des Blockcopolymers ausmachen.

9. Pneumatisches Objekt nach einem der vorhergehenden Ansprüche, wobei das Gewicht Mn des SIBS-Elastomers zwischen 40.000 und 400.000 g/mol liegt.

10. Pneumatisches Objekt nach einem der vorhergehenden Ansprüche, wobei die dichte Schicht ein Strecköl für das Elastomer umfasst.

11. Pneumatisches Objekt nach Anspruch 10, wobei das zahlenmittlere Molekulargewicht (Mn) des Strecköls zwischen 350 und 4000 g/mol liegt.

12. Pneumatisches Objekt nach Anspruch 11, wobei der Streckölgehalt mehr als 5 phe beträgt und vorzugsweise zwischen 5 und 100 phe liegt.

13. Pneumatisches Objekt nach einem der vorhergehenden Ansprüche, wobei die dichte Schicht eine Dicke zwischen 0,1 und 10 mm und vorzugsweise zwischen 0,1 und 1,0 mm aufweist.

14. Pneumatisches Objekt nach Anspruch 13, wobei die dichte Schicht auf der Innenwand des pneumatischen Objekts angeordnet ist.

15. Pneumatisches Objekt nach einem der Ansprüche 1 bis 14, **dadurch gekennzeichnet, dass** es sich bei dem Objekt um einen Luftreifen handelt.

16. Pneumatisches Objekt nach einem der Ansprüche 1 bis 14, **dadurch gekennzeichnet, dass** es sich bei dem pneumatischen Objekt um einen Luftschlauch handelt.

17. Verfahren zum Abdichten eines pneumatischen Objekts gegenüber den Aufpumpgasen, bei dem man eine gasdichte Elastomerschicht gemäß einem der Ansprüche 1 bis 13 in das pneumatische Objekt bei dessen Herstellung einarbeitet oder zu dem pneumatischen Objekt nach dessen Herstellung hinzufügt.

18. Verfahren nach Anspruch 17, bei dem man die dichte Elastomerschicht auf der Innenwand des pneumatischen Objekts anordnet.

19. Verfahren nach Anspruch 18 zum Abdichten eines Luftreifens, bei dem man in einem ersten Schritt die dichte Elastomerschicht flach auf eine Aufbautrommel aufbringt, bevor man die Schicht mit dem Rest der Luftreifenkonstruktion bedeckt.

20. Verwendung einer Elastomerschicht gemäß einem der Ansprüche 1 bis 13 als aufpumpgasdichte Schicht in einem pneumatischen Objekt.
